# EUROPEAN PATENT APPLICATION

(11) **EP 0 798 938 A2**
(43) Date of publication of application: **01.10.1997**
(21) Application number: 97302068.8
(22) Date of filing: 26.03.1997
(51) Int. Cl.: H04N 9/804

(54) **Method and system for the compression and decompression of digital television signals encoded in the palplus system**

(30) Priority: 29.03.1996 GB 9606641
(71) Applicant: DIGI-MEDIA VISION LIMITED, West Drayton, Middlesex UB7 0DQ (GB)
(72) Inventor: Bock, Alois Martin, Dr., Eastleigh, Hampshire (GB); Curtis, John Stuart, Mr., Eastleigh, Hampshire SO50 5HB (GB)
(74) Representative: Brown, Angela Mary

(57) **Abstract**

This invention relates to a method and system for compressing and decompressing digital television signals encoded in the PALplus system. A PALplus encoded television signal has video signals which have an aspect ratio of 16:9 compared to an aspect ratio of 4:3 in common use for standard PAL signals. To achieve this the picture height of the main video signal is reduced from 576 active lines to 430 active lines and the remaining 144 lines are used to transmit a low-level helper signal.

If a PALplus signal is to be transmitted through a digital video compression system using a standard PAL decoder, compression artefacts in the helper signal are amplified in the PALplus receiver to such an extent that the picture is severely degraded. To avoid the need and expense of a full PALplus encoder at the output of the compression decoder, the presence of the helper signal is detected by a line counter (27) and the helper signal is switched (26) into the channel used for the luminance signal whenever the presence of the helper signal is indicated by the line counter (27). The helper signal is thus separated from the main video signal. By this means a standard PAL compression decoder can be used while avoiding the severe picture degradation referred to which would accompany transmission of the helper signal through the main video signal channel.

## Description

The present invention relates to a method and apparatus for compressing and decompressing digital television signals which have been encoded using the PALplus system.

The PALplus system of encoding television signals was developed for the backward compatible transmission of video signals with an aspect ratio of 16:9 over a standard PAL transmission system where an aspect ratio of 4:3 is commonly used. To achieve this the picture height of the main video signal is reduced from 576 active lines to 430 active lines. Most of the remaining lines are used for the transmission of a low-level modulated helper signal which is applied in the PALplus decoder to restore the full vertical luminance resolution. In addition to the modulated helper signal, a PALplus signal is processed to reduce cross-luminance and cross-chrominance effects. Furthermore a status line is used for the transmission of the aspect ratio and other system information and PALplus reference signals are also transmitted.

If a PALplus signal is to be transmitted through a digital video compression system using standard PAL equipment, PAL decoding, compression artefacts and PAL re-encoding badly distort the helper signal to such an extent that the final PALplus picture is severely degraded. The main picture luminance and chrominance pre-processing performed by the PALplus encoder would also be disturbed, so cross effects would occur on the PALplus decoded picture. Furthermore the compression system might corrupt the status information and reference lines making the system unusable in practice.

A PALplus signal could be fully decoded before being transmitted through a digital video compression system, the decoding including the helper signal and status information and the reconstruction of the component video signal with full vertical resolution. This would require a complete PALplus encoder at the output from the compression decoder which would add substantial cost to the compression system.

According to the present invention there is provided a method of compressing PALplus encoded television signals, the method comprising:
demodulating and filtering the television signals to derive therefrom component signals including colour difference signals, the helper signal and the luminance signal,
supplying the colour difference and luminance signals to separate inputs of a compression encoder,
detecting when the helper signal is present,
and switching the luminance input of the compression encoder to receive the helper signal in place of the luminance signal whenever the presence of the helper signal is detected.

In another aspect, the present invention provides a digital television signal compression system for compressing television signals encoded using PALplus encoding, the compression system comprising:
pre-processing means to demodulate and filter the television signals to derive therefrom component signals including colour difference signals, the helper signal and the luminance signal,
a compression encoder having inputs to receive separately the colour difference signals and the luminance signal,
detecting means to indicate when the helper signal is present,
and switching means to switch the luminance input of the compression encoder to receive the helper signal from the pre-processing means in place of the luminance signal whenever the presence of the helper signal is detected.

In a further aspect, the present invention provides a method of encoding digital television signals, the method comprising:
decompressing, by means of a compression decoder, the sub-carrier, colour difference, luminance, helper and synchronising components of a compressed PALplus encoded television signal, the luminance and helper signal components being supplied through a common channel of the compression decoder,
applying the sub-carrier and colour difference signals to sub-carrier modulator means,
detecting when the helper signal is present,
summing the output from the sub-carrier modulator means with the luminance component from the compression decoder,
and switching the said common channel of the compression decoder to present the helper signal to be modulated by the sub-carrier modulator means whenever the presence of the helper signal is detected.

In yet a further aspect, the present invention provides a digital television signal encoding system comprising:
a compression decoder to decompress sub-carrier, colour difference, luminance, helper and synchronising components of a compressed PALplus encoded television signal, the luminance and helper signal components being supplied through a common channel of the compression decoder,
sub-carrier modulator means having inputs to receive the sub carrier and colour difference signals from the compression decoder,
detecting means to detect when the helper signal is present,
summing means to sum the output from the sub-carrier modulator means with the luminance component from the compression decoder and,
switching means to switch the said common channel of the compression decoder to present the helper signal to be modulated by the sub-carrier modulator means whenever the presence of the helper signal is detected.

The invention will now be further described, by way of example, with reference to the accompanying drawings in which:
Figure 1 shows in block diagram form a possible transmission system for the transmission of television signals encoded using PALplus encoding and employing digital video compression;
Figure 2 shows in block diagram form a pre-processing circuit according to the invention for the compression of a television signal using PALplus encoding;
Figure 3 shows in block diagram form a post-processing circuit according to the invention for the decompression of television signals using PALplus encoding and;
Figure 4 shows in block diagram form further detail of an encoder included in the circuit of Figure 1.

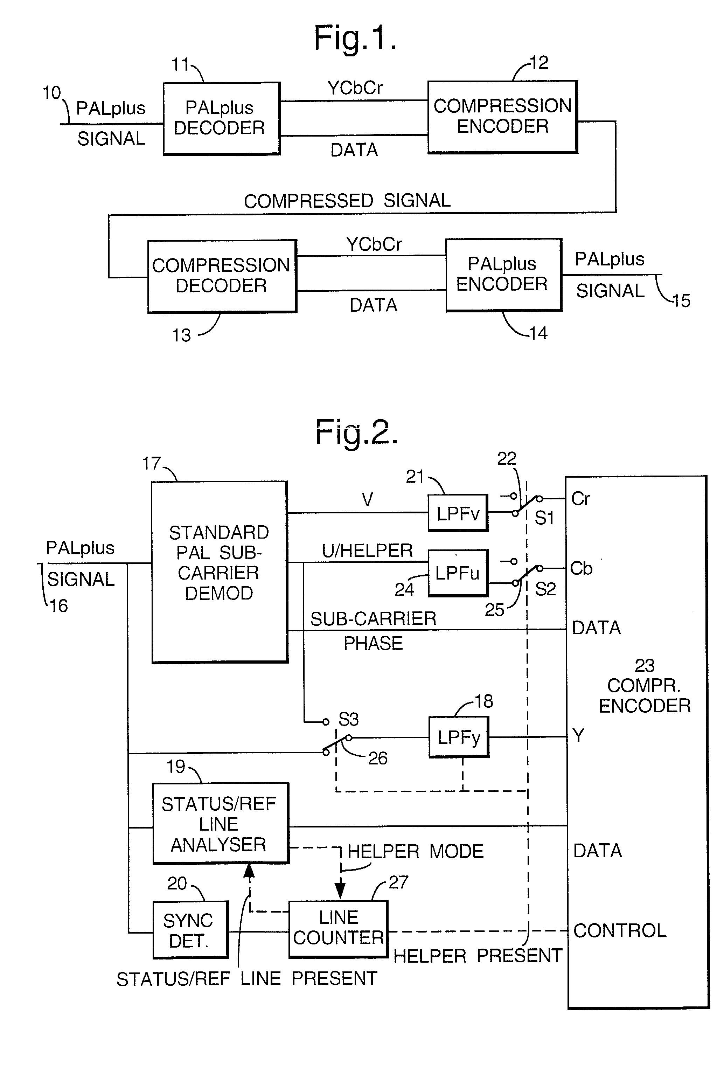

In Figure 1 a television signal using PALplus encoding is applied at an input terminal 10 to a PALplus decoder 11 to separate the video components. These components include colour difference signals Cb and Cr, a luminance signal Y, and data. The decoded television signal is applied to a compression encoder 12 and the resulting compressed signal is transmitted. The decoder 11 and encoder 12 are located at a transmitting station and the compressed signal is transmitted to a receiver including a compression decoder 13 and a PALplus encoder 14.

The compression decoder 13 supplies the colour difference signals Cb and Cr, the luminance signal Y and the data to be encoded by the PALplus encoder 14 into an output television signal at the terminal 15 which is PALplus encoded. Whilst such a system of transmission will work to effect the transmission of compressed television signals which are PALplus encoded, it suffers from the drawback that it is necessary to provide a full PALplus encoder, such as the encoder 14, at the receiver. A PALplus encoder is very substantially more expensive than a simple PAL encoder and it is desirable therefore to use a method and system in which the need for a PALplus encoder is avoided.

Turning now to Figure 2, there is shown a transmitter station including a terminal 16 to which is applied a television video signal which is PALplus encoded. The signal is received by a simple PAL sub-carrier demodulator 17, (i.e. not using a PAL delay line), a switchable low pass filter 18, a status/reference line analyser 19 and a synchronisation detector 20. The demodulator 17 is effective to demodulate the input television signal to produce, at respective outputs, the V and U signal components, and the sub-carrier phase. It will be observed that the helper signal is also produced on the same output as the U signal. Delay matching for the various paths in the circuit of Figure 2 is required but has been omitted for the sake of simplicity.

A fixed low-pass filter 21 filters the demodulated colour difference signal V for application through a switch 22 to the Cr input of a compression encoder 23. A fixed low-pass filter 24 filters the demodulated colour difference signal U for application to the colour difference input Cb of the compression encoder 23 via the switch 25. The demodulated sub-carrier phase is applied directly to the compression encoder 23. The low-pass filter 18 filters the luminance component of the PALplus television signal, when connected through a switch 26 to the terminal 16, and supplies the filtered luminance signal to the Y input of the compression encoder 23.

The synchronous detector 20 extracts the sync information from the PALplus signal to control a line counter 27 which identifies which lines carry helper signals and which carry ordinary video signals. The line counter is also used to identify the status line and reference lines. The line counter 27 gates the status/reference line analyser 19 to decode all status line information and analyse the reference signals. Line 23 of a PALplus signal carries important status information about the picture aspect ratio, film or camera mode, etc. This information has to be decoded and transmitted in a separate data channel so that it can be reproduced and re-inserted after compression decoding. Furthermore the PALplus reference signals, transmitted at the end of line 23 and on line 623, have to be analysed and parameters (such as the amplitude and phase of the helper reference burst on line 23 and the amplitude of the white level reference on line 623) transmitted to the decoder in order to give an accurate reproduction of these signals in the decoder. The status/reference line analyser 19 is connected to a data input of the compression encoder 23.

The line counter 27 is also effective to operate the switches 22, 25 and 26. During helper lines, the colour-difference inputs Cb and Cr to the compression encoder 23 are switched off by the switches 22 and 25 and the demodulated helper signal from the demodulator 17 is switched by the switch 26 into the input of the low-pass filter 18 in place of the luminance signal.

If an attempt was made to transmit the helper signal in the Cb channel of the compression system, it would get badly distorted because not only are the colour-difference signals potentially down-sampled both horizontally and vertically, they are also compressed more than the luminance signal. In a typical digital video compression system only about 10% of the data rate is spent on each colour-difference signal.

In addition to switching the helper signal onto the luminance channel, the helper present signal from the line counter 27 is also used to switch the bandwidth of the low-pass filter 18 during helper lines. This is necessary because the helper signal requires a different bandwidth than the luminance signal.

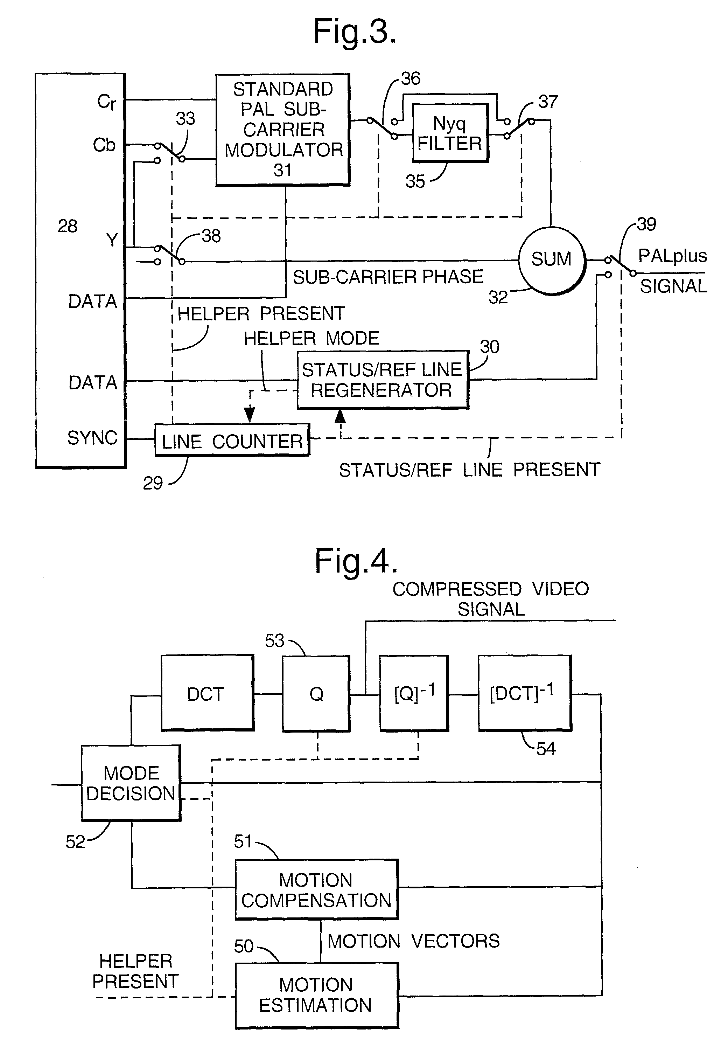

Furthermore, the helper present signal is fed to the compression encoder 23 to control the function of the encoding algorithm during helper lines as will now be explained. For the compression of normal video signals, motion compensation is used to improve the temporal prediction of video frames. For the transmission of helper lines, however, motion compensation has to be disabled to avoid motion compensation from the main video signal into the helper lines and vice versa. Instead, picture areas which contain the helper signal are either intra coded (i.e. not predicted at all) or predicted with zero motion vectors. Furthermore, care is taken in the compression encoder 23 to ensure that quantisation of the helper signal is kept to a minimum. Figure 4 shows the control exercised by the helper present signal on the compression encoder 23. The helper present signal is effective to disable the motion estimation indicated by the block 50. The motion vectors from the block 50 are reduced to zero so as to disable the motion estimation indicated by the block 51. The mode decision represented by the block 52 is forced to intra-coding from predictive coding and the forward quantisation Q represented by the block 53 is forced to a low value while the inverse quantisation represented by the block 54 is changed to a corresponding value.

In compression systems based on the ISO/IEC standard MPEG-1 or MPEG-2, pictures are encoded in slices which are 16 video lines high. Each slice is divided into macroblocks of 16 X 16 luminance pixels. Each luminance macroblock is in turn divided into 4 Discrete Cosine Transform (DCT) blocks of 8 X 8 pixels each. Of the 144 helper lines used in PALPlus television signals, 72 lines are above the main picture and 72 lines are below it. This corresponds to a height of exactly 9 DCT blocks both above and below the main video signal. By transmitting the helper signal in the luminance channel of the compression system it is, therefore, possible to separate the helper signal from the main video signal. It is important that helper signals and normal video signals never share the same DCT block because the helper signal is usually at a much lower level than a normal luminance signal. Otherwise there would be significant cross-talk from the luminance signal to the helper signal.

The PAL sub-carrier demodulator is phase-locked to the sub-carrier frequency of the incoming PALplus signal. Although the phase of the sub-carrier is, in turn, locked to the line rate of the PALplus signal, the phase position at any particular point in a frame repeats only every fourth frame. Since the helper signal is modulated onto the colour sub-carrier it is desirable to convey this phase information and the V-switching sequence to the PALplus encoder at the receiver.

The circuit at the receiver for processing and reconstructing the PALplus television signal after decompression by a compression decoder is shown in Figure 3. In Figure 3 the compression decoder 28 is arranged to receive the compressed encoded signal from the compression encoder 23 of Figure 2. The decoder 28 has an output for the colour difference signals Cr and Cb, the luminance signal Y, the sub-carrier phase, the status line data and the vertical sync signal. A line counter 29 counts the lines to detect when the helper signal is present and when the status line is present. A status/reference line regenerator 30 is used to re-insert status information and reference signals into the PALplus output signal through a switch 39.

A simple PAL sub-carrier modulator 31 receives the colour difference signals Cr and Cb for modulation onto the sub-carrier before passage to a summing circuit 32 via switches 36 and 37. The switches 36 and 37 bypass a Nyquist filter 35 except when the helper signal is present . The luminance signal is summed with the output from the modulator 31. Switches 33 and 38 are used to switch the luminance channel from the summing circuit 32 to the modulator 31 in place of the colour difference signal Cb whenever the helper signal is present. The switches 33, 36, 37 and 38 are operated under the control of the line counter 29.

The circuit shown in Figure 3 is effective to re-insert the helper signal into the U channel of the sub-carrier modulator 31. The modulated sub-carrier, the luminance signal and the status line constitute the reconstructed PALplus signal.

## Claims

1. A method of compressing PALplus encoded television signals, the method comprising:
demodulating and filtering the television signals to derive therefrom component signals including colour difference signals, a helper signal and a luminance signal,
supplying the colour difference and luminance signals to separate inputs of a compression encoder,
detecting when the helper signal is present,
and switching the luminance input of the compression encoder to receive the helper signal in place of the luminance signal whenever the presence of the helper signal is detected.

2. A method as claimed in claim 1, wherein the step of demodulating and filtering the television signals includes
passing the PALplus encoded television signals to a demodulator to derive a V signal at a first output of the demodulator and U and helper signals at a second output of the demodulator,
filtering the PALplus encoded signals through a low-pass filter to derive the luminance signal,
and switching the low-pass filter, under the control of the line counting means, to receive the helper signal in place of the PALplus encoded signals.

3. A method as claimed in claim 2, wherein the low-pass filter is switched in bandwidth whenever the helper signal is present.

4. A method as claimed in claim 1, 2 or 3, wherein the PALplus encoded television signals are applied to a status and reference line analyser to decode the status line and analyse reference lines under the gating control of the line counting means.

5. A method as claimed in claim 1, 2, 3 or 4, wherein the compression encoder is controlled by the presence of the helper signal to switch from an intra-coding mode to a predictive coding mode.

6. A method as claimed in any one of the preceding claims, wherein the compression encoder is controlled by the presence of the helper signal to lower the quantisation of the helper signal.

7. A method as claimed in any one of the preceding claims, wherein the compression encoder is controlled by the presence of the helper signal to manipulate motion compensation so as to reduce the effect of motion compensation from the main video signal into the helper lines.

8. A digital television signal compression system for compressing television signals encoded using PALplus encoding, the compression system comprising:
pre-processing means to demodulate and filter the television signals to derive therefrom component signals including colour difference signals, the helper signal and the luminance signal,
a compression encoder having inputs to receive separately the colour difference signals and the luminance signal,
detecting means to indicate from the line count of the television signals when the helper signal is present,
and switching means to switch the luminance input of the compression encoder to receive the helper signal from the pre-processing means in place of the luminance signal whenever the presence of the helper signal is detected.

9. A system as claimed in claim 8, wherein the pre-processing means include;
a demodulator to receive the PALplus encoded television signals and to derive a V signal at a first output from the demodulator and to derive U and helper signals from a second output from the demodulator,
and a low-pass filter to filter the PALplus encoded signals to derive the luminance signal,
the low-pass filter being switchable, under the control of the line switching means, to receive the helper signal in place of the PALplus encoded signals.

10. A system as claimed in claim 9, wherein the low-pass filter is switchable in bandwidth under the control of the line counter whenever the helper signal is present.

11. A system as claimed in claim 8, 9, or 10, wherein a status and reference line analyser is provided to decode the status line and analyse reference lines under the control of the line counting means.

12. A system as claimed in any one of claims 8 to 11, wherein the compression encoder has means controlled by the presence of the helper signal to switch from an intra-coding mode to a predictive coding mode.

13. A system as claimed in any one of claims 8 to 12, wherein the compression encoder has means controlled by the presence of the helper signal to lower the quantisation of the helper signal.

14. A system as claimed in any one of claims 8 to 13, wherein the compression encoder has means controlled by the presence of the helper signal to manipulate motion estimation so as to avoid motion compensation from the main video into the helper lines.

15. A method of decoding digital television signals, -the method comprising;
decompressing, by means of a compression decoder, the sub-carrier, colour difference, luminance, helper and synchronising components of a compressed PALplus encoded television signal, the luminance and helper signal components being supplied through a common channel of the compression decoder,
applying the sub-carrier and colour difference signals to sub-carrier modulator means,
detecting when the helper signal is present,
summing the output from the sub-carrier modulator means with the luminance component from the compression decoder,
and switching the said common channel of the compression decoder to present the helper signal to be modulated by the sub-carrier modulator means whenever the presence of the helper signal is detected.

16. A method as claimed in claim 15, wherein the data representing the status line of the PALplus encoded television signals is decompressed by means of the compression decoder and the status line data is encoded by a status and reference line regenerator under the control of the line counting means.

17. A digital television signal decoding system comprising:
a compression decoder to decompress sub-carrier, colour difference, luminance, helper and synchronising components of a compressed PALplus encoded television signal, the luminance and helper signal components being supplied through a common channel of the compression decoder,
sub-carrier modulator means having inputs to receive the sub-carrier and colour difference signals from the compression decoder,
detecting means to derive an indication when the helper signal is present,
summing means to sum the output from the sub-carrier modulator means with the luminance component from the compression decoder and,
switching means to switch the said common channel of the compression decoder to present the helper signal to be modulated by the sub-carrier modulator means whenever the presence of the helper signal is detected.

18. A system as claimed in claim 17, wherein the data representing the status line of the PALplus encoded television signals is decompressed by means of the compression decoder and a status and reference line regenerator is provided which operates under the control of the line counting means to regenerate the status line data.

19. A method for compressing PALplus encoded television signals and subsequently decoding the compressed television signals, wherein the television signals are compressed at a transmitting station by the method claimed in any one of claims 1 to 7, and the compressed signals are transmitted to a receiving station at which they are decoded by the method claimed in claim 15 or 16.

20. A system for compressing PALplus encoded television signals and subsequently decoding the compressed television signals, wherein the system includes a transmitting station having a compression system for compressing the television signals as claimed in any one of claims 8 to 14 and a receiving station to receive the compressed television signals, the receiving station including a decoding system for decoding the compressed television signals as claimed in claim 17 or 18.
